(19) Europäisches Patentamt
European Patent Office
Office européen des brevets

(11) EP 4 663 673 A1

(12) EUROPEAN PATENT APPLICATION
published in accordance with Art. 153(4) EPC

(43) Date of publication:
17.12.2025 Bulletin 2025/51

(21) Application number: 24779128.8

(22) Date of filing: 04.03.2024

(51) International Patent Classification (IPC):
*C08G 18/08* (2006.01) *C08G 18/09* (2006.01)
*C08G 18/71* (2006.01) *C09D 175/04* (2006.01)

(52) Cooperative Patent Classification (CPC):
C08G 18/08; C08G 18/09; C08G 18/71;
C09D 175/04

(86) International application number:
PCT/JP2024/008109

(87) International publication number:
WO 2024/202990 (03.10.2024 Gazette 2024/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.03.2023 JP 2023056982

(71) Applicant: Tosoh Corporation
Yamaguchi 746-8501 (JP)

(72) Inventors:
- WADA, Yuya
Yokkaichi-shi, Mie 510-8540 (JP)
- NAKASHIMA, Yuji
Yokkaichi-shi, Mie 510-8540 (JP)

(74) Representative: TBK
Bavariaring 4-6
80336 München (DE)

# (54) SURFACE SMOOTHING AGENT FOR POLYURETHANE COATING FILM, COMPOSITION, CURING AGENT, POLYURETHANE RESIN-FORMING COMPOSITION, COATING COMPOSITION, AND COATING FILM

(57) A composition comprising a polyisocyanate, wherein the polyisocyanate comprises a derivative derived from an aliphatic diisocyanate, and a content of a cyclic compound represented by the following formula (1) is from 0.1 to 15% by mass with respect to a total amount of the composition.

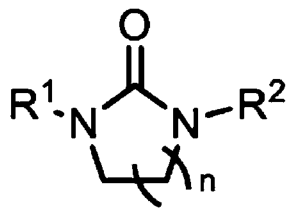

(1)

[In Formula (1), n is an integer from 1 to 6, and $R^1$ and $R^2$ are each independently a hydrogen atom or a monovalent organic group having 1 to 20 carbon atoms.]

EP 4 663 673 A1

## Description

### Technical Field

The present disclosure relates to a surface smoothing agent for a polyurethane coating film, a composition, a curing agent, a polyurethane resin-forming composition, a coating composition, and a coating film.

### Background Art

As curing agents for forming urethane coating films, curing agents are known that comprise derivatives derived from commonly used aliphatic isocyanates such as hexamethylene diisocyanate and pentamethylene diisocyanate. Polyurethane coating films formed using such curing agents have advantages such as a reduction in baking temperature and high weather resistance, and as their demand increases, the required performance has become higher.

Here, Patent Literature 1 discloses a polyisocyanate composition comprising a derivative modified with 1.0 to 5.0 parts by mass of isobutyl alcohol with respect to 100 parts by mass of pentamethylene diisocyanate, and containing a predetermined proportion of a uretdione derivative consisting of a dimer of pentamethylene diisocyanate. According to Patent Literature 1, a coating containing a polyurethane resin obtained from this polyisocyanate composition can improve its hardness, chemical resistance, and surface smoothness in a well-balanced manner.

### Citation List

### Patent Literature

Patent Literature 1: Japanese Patent No. 6482657

### Non Patent Literature

Non Patent Literature 1: Journal of Organic Chemistry 1978, 43, 1544-1546

Non Patent Literature 2: Zhurnal Vsesoyuznogo Khimicheskogo Obshchestva im. D. I. Mendeleeva 1979, 24, 310-311

### Summary of Invention

### Technical Problem

However, particularly in recent years, the performance requirements for polyurethane coating films from the market have become extremely high, and there is a strong demand for the development of new surface smoothing agents for polyurethane coating films that can impart smoothness to the coating film.

Therefore, some aspects of the present disclosure are directed to providing a surface smoothing agent for a polyurethane coating film, a composition, a curing agent, a polyurethane resin-forming composition, and a coating composition that contribute to the production of a coating film with excellent surface smoothness. Another aspect of the present disclosure is directed to providing a coating film with excellent surface smoothness.

### Solution to Problem

The present disclosure provides the following [1] to [10] in some aspects.

[1] A composition comprising a polyisocyanate, wherein

the polyisocyanate comprises a derivative derived from an aliphatic diisocyanate, and
a content of a cyclic compound represented by the following formula (1) is from 0.1 to 15% by mass with respect to a total amount of the composition:

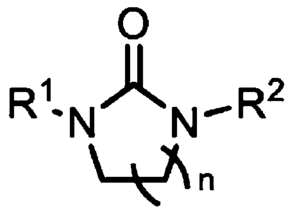

(1)

[In Formula (1), n is an integer from 1 to 6, and $R^1$ and $R^2$ are each independently a hydrogen atom or a monovalent organic group having 1 to 20 carbon atoms.]

[2] The composition according to [1], wherein the derivative comprises an isocyanurate derived from an aliphatic diisocyanate.
[3] The composition according to [1] or [2], wherein the aliphatic diisocyanate comprises butane diisocyanate.
[4] The composition according to any one of [1] to [3], wherein

the $R^1$ and the $R^2$ are each independently a hydrogen atom, an aliphatic group having 1 to 20 carbon atoms, an alicyclic group having 3 to 20 carbon atoms, or an aromatic group having 6 to 20 carbon atoms, and
the aliphatic group, the alicyclic group, and the aromatic group may be substituted with substituent(s) and may contain one or more atoms selected from the group consisting of oxygen atoms, nitrogen atoms, and sulfur atoms.

[5] The composition according to any one of [1] to [4], wherein one of the $R^1$ and the $R^2$ is a hydrogen atom, and the other is a monovalent organic group having 1 to 20 carbon atoms.
[6] A curing agent for forming a polyurethane resin, comprising the composition according to any one of [1] to [5].
[7] A polyurethane resin-forming composition comprising the composition according to any one of [1] to [5] and a polyol.
[8] A coating composition comprising the polyurethane resin-forming composition according to [7].
[9] A coating film, comprising a cured product of the coating composition according to [8].
[10] A surface smoothing agent for a polyurethane coating film, comprising a cyclic compound represented by the following formula (1):

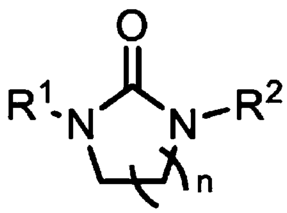

(1)

[In formula (1), n is an integer from 1 to 6, and $R^1$ and $R^2$ are each independently a hydrogen atom or a monovalent organic group having 1 to 20 carbon atoms.]

## Advantageous Effects of Invention

According to some aspects of the present disclosure, it is possible to provide a surface smoothing agent for a polyurethane coating film, a composition, a curing agent, a polyurethane resin-forming composition, and a coating composition that contribute to the production of a coating film with excellent surface smoothness. According to another aspect of the present disclosure, it is possible to provide a coating film with excellent surface smoothness.

## Description of Embodiments

In this specification, a numerical range indicated using "to" indicates a range including the numerical values described before and after "to" as the minimum and maximum values, respectively. Unless otherwise specified, the units of the numerical values described before and after "to" are the same. In the numerical ranges described stepwise in this specification, the upper or lower limit value of a numerical range in one step may be replaced with the upper or lower limit value of a numerical range in another step. Furthermore, in the numerical ranges described in this specification, the upper or lower limit value of the numerical range may be replaced with a value shown in the Examples. In addition, the upper and lower limit values described individually can be combined arbitrarily. In this specification, "(meth)acryl" means at least one

of acryl and the corresponding methacryl.

Hereinafter, preferred embodiments of each aspect of the present disclosure will be described. However, each aspect of the present disclosure is not limited to the following embodiments in any way.

[Surface Smoothing Agent for Polyurethane Coating Film]

A surface smoothing agent for a polyurethane coating film according to one aspect of the present disclosure comprises a cyclic compound represented by formula (1) (hereinafter, referred to as "cyclic compound A").

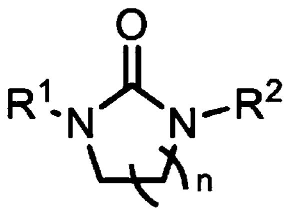

(1)

In formula (1), n is an integer from 1 to 6. Therefore, the cyclic compound A can be said to be a compound having a 5- to 10-membered cyclic urea group in the molecule. $R^1$ and $R^2$ in formula (1) are each independently a hydrogen atom or a monovalent organic group having 1 to 20 carbon atoms.

The cyclic compound A can improve the surface smoothness of a polyurethane coating film.

n in formula (1) may be an integer from 1 to 4 from the viewpoint of improving feasibility on an industrial scale and compatibility with a polyisocyanate. That is, the cyclic compound A may be a compound having a 5- to 8-membered cyclic urea group.

One of $R^1$ and $R^2$ in formula (1) may be a hydrogen atom, and the other may be a monovalent organic group having 1 to 20 carbon atoms, from the viewpoint of improving the mechanical properties of the coating film.

The number of carbon atoms of the monovalent organic group may be from 3 to 18, and may be from 6 to 17.

The monovalent organic group may be an aliphatic group having 1 to 20 carbon atoms, an alicyclic group having 3 to 20 carbon atoms, or an aromatic group having 6 to 20 carbon atoms, from the viewpoint of improving compatibility with a polyisocyanate and suppressing a decrease in coating film properties. These groups may be substituted with substituent(s), and may contain one or more atoms selected from the group consisting of an oxygen atom, a nitrogen atom, and a sulfur atom. That is, the aliphatic group, the alicyclic group, and the aromatic group in this specification include not only groups composed only of carbon atoms and hydrogen atoms, but also groups in which a part of each group is substituted with substituent(s) and/or one or more atoms selected from the group consisting of an oxygen atom, a nitrogen atom, and a sulfur atom.

The number of substituents may be, for example, from 1 to 5. Examples of the substituent include a hydroxy group, an alkoxy group, an amino group, an amido group, a carboxy group, a carbonyl group, an ester group, an ether group, a thiol group, a thioether group, a vinyl group, an aryl group, an isocyanate group, a halogeno group, and the like. Among these, when the monovalent organic group is substituted with isocyanate group(s), that is, when the cyclic compound A is an isocyanate compound, the cyclic compound A is chemically bonded in the polyurethane coating film, so that liberation of the cyclic compound A can be prevented. The number of isocyanate groups that the cyclic compound has may be 2 or more, but is 1 from the viewpoint of improving coating film smoothness.

The aliphatic group having 1 to 20 carbon atoms may be linear or branched. Examples of the aliphatic group having 1 to 20 carbon atoms include an alkyl group, an alkoxy group, an alkenyl group, a hydroxyalkyl group, a hydroxyalkoxy group, an alkyl group substituted with alkoxy group(s), a haloalkyl group, a dihaloalkyl group, a trihaloalkyl group, an alkylamino group, an aminoalkyl group, an alkoxycarbonyl group, an alkylcarbonyl group, a monoalkylamido group which may be substituted with isocyanate group(s), an alkylamido group, and the like. The carbon chains of these groups may be linear or branched.

Examples of the alicyclic group having 3 to 20 carbon atoms include a cycloalkyl group, a bicycloalkyl group, and the like.

Examples of the aromatic group having 6 to 20 carbon atoms include a phenyl group, an alkoxyphenyl group, an arylamino group, a diarylamino group, an arylalkylamino group, a cyclic amino group, an arylcarbonyl group, an aroyl group, and the like.

The monovalent organic group may be a group represented by the following formula (i) from the viewpoint of improving the mechanical properties of the coating film.

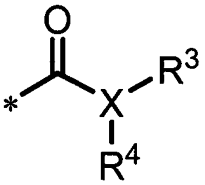 (i)

In formula (i), X is CH or N, $R^3$ and $R^4$ are each independently a hydrogen atom or a monovalent organic group having 1 to 18 carbon atoms, and * is a bonding site that binds to N in formula (1). X may be N from the viewpoint of further improving the mechanical properties of the coating film. Examples of the monovalent organic group are the same as the examples of the monovalent organic group described above, except that the number of carbon atoms is different. For example, $R^3$ and $R^4$ may be an aliphatic group having 1 to 18 carbon atoms, an alicyclic group having 3 to 18 carbon atoms, or an aromatic group having 6 to 18 carbon atoms, from the viewpoint of compatibility with a polyisocyanate. In addition, $R^3$ and $R^4$ may be a monovalent organic group substituted with isocyanate group(s) from the viewpoint of preventing liberation of the cyclic compound from the coating film. One of $R^3$ and $R^4$ may be a hydrogen atom, and the other may be a monovalent organic group having 1 to 18 carbon atoms, from the viewpoint of further improving the mechanical properties of the coating film while maintaining favorable compatibility with a polyisocyanate.

The cyclic compound A may be a compound represented by the following formula (1A) from the viewpoint of improving compatibility with a polyisocyanate and preventing liberation from the coating film.

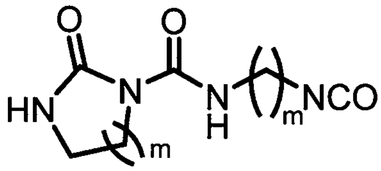 (1A)

In formula (1A), m may be an integer from 1 to 4.

Specific examples of the cyclic compound A include compounds represented by the following formulas (2) to (4).

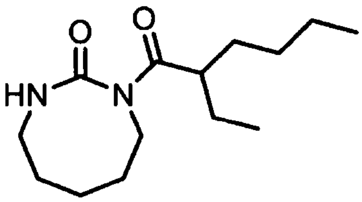 (2) 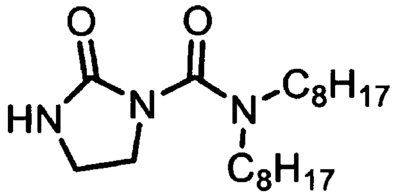 (3)

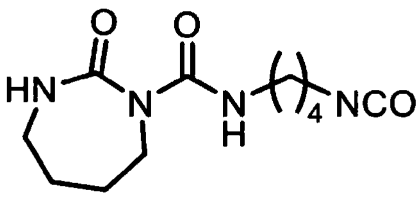 (4)

The cyclic compound A can be synthesized, for example, according to the synthesis methods described in Non-Patent Literatures 1 and 2, the synthesis method described in the Examples below, and the like. The cyclic compound A can also be obtained by carrying out an isocyanuration reaction of an aliphatic diisocyanate in a state diluted with an organic solvent to allow the reaction for producing the cyclic compound A to proceed. Hereinafter, the reaction for producing the cyclic compound A is referred to as a cyclization reaction. Details of the isocyanuration will be described later.

The cyclic compound A may be a main component of the surface smoothing agent for a polyurethane coating film. The surface smoothing agent for a polyurethane coating film may consist only of the cyclic compound A, or may contain components other than the cyclic compound A (such as components mixed in during the production of the cyclic compound A). The content of the cyclic compound A may be, for example, 60% by mass or more, 80% by mass or more, or 90% by mass or more, based on the total mass of the surface smoothing agent for a polyurethane coating film.

[Composition]

A composition according to one aspect of the present disclosure is a composition comprising a polyisocyanate (hereinafter, also referred to as a "polyisocyanate composition"), wherein the polyisocyanate comprises a derivative derived from an aliphatic diisocyanate (hereinafter, also referred to as "derivative A"), and the content of the above-described cyclic compound A is from 0.1 to 15% by mass with respect to the total amount of the composition (polyisocyanate composition).

The above composition can be used as a curing agent for forming a polyurethane resin. According to the above composition, it is possible to obtain a curing agent that contributes to the formation of a polyurethane coating film with excellent surface smoothness.

The aliphatic diisocyanate may be, for example, a diisocyanate represented by OCN-R-NCO (where R is an alkylene group having 2 to 30 carbon atoms which may be substituted with substituents). The number of carbon atoms of the alkylene group may be from 2 to 4. Examples of the substituents include an alkyl group, a carbonyl group, an ester group, a vinyl group, an aryl group, an ether group, a thioether group, a halogeno group, and the like.

Specific examples of the aliphatic diisocyanate include ethane diisocyanate, propane diisocyanate, butane diisocyanate, hexamethylene diisocyanate, lysine diisocyanate, and the like. Among these, when butane diisocyanate is used (that is, when the polyisocyanate composition comprises a derivative derived from an aliphatic diisocyanate comprising butane diisocyanate), the compatibility with the cyclic compound A is favorable, and the coating film tends to have higher hardness.

The aliphatic diisocyanate may be used alone, or in combination of two or more types. In other words, the derivative A may be rephrased as a derivative derived from at least one type of aliphatic diisocyanate.

The derivative A may be an isocyanurate, an iminooxadiazinedione, an oxadiazinetrione, a uretdione, an allophanate, a biuret, an adduct with a compound having a hydroxyl group, or the like. Among these, when an isocyanurate is used as the derivative A (that is, when the polyisocyanate composition comprises an isocyanurate derived from an aliphatic diisocyanate), the weather resistance and hardness of the resulting coating film tend to be improved. The isocyanurate may be a mononuclear isocyanurate (an aliphatic diisocyanate trimer having one isocyanurate group) or a polynuclear isocyanurate, or a mixture thereof.

The content of the mononuclear isocyanurate may be 40% by mass or more, and may be 50% by mass or more or 60% by mass or more, with respect to the total amount of the polyisocyanate composition, from the viewpoint of enhancing the weather resistance and hardness of the resulting coating film. The content of the mononuclear isocyanurate may be 85% by mass or less, and may be 75% by mass or less or 65% by mass or less, with respect to the total amount of the polyisocyanate composition, from the viewpoint of improving the workability of the resulting coating. From the above viewpoints, the content of the mononuclear isocyanurate may be from 40 to 85% by mass with respect to the total amount of the polyisocyanate composition.

The content of the mononuclear isocyanurate can be measured, for example, by gel permeation chromatography (GPC). More specifically, it can be measured in accordance with the Examples described later.

The content of the derivative A may be from 80 to 99.9% by mass with respect to the total amount of the polyisocyanate composition, from the viewpoint of making it easier to obtain a cured film having more excellent surface smoothness. From the same viewpoint, the content of the derivative A may be 85% by mass or more, 90% by mass or more, 92% by mass or more, or 95% by mass or more, and may be 99% by mass or less or 98% by mass or less, with respect to the total amount of the polyisocyanate composition. Note that when the cyclic compound A is a derivative derived from an aliphatic diisocyanate, the above "content of derivative A" does not include the content of the cyclic compound A. The same applies to the content of derivative A in the "total amount of the content of derivative A and the content of cyclic compound A" described later.

The cyclic compound A is a compound represented by the above formula (1). Details of the cyclic compound A are the same as the details of the cyclic compound A contained in the above-described surface smoothing agent for a polyurethane coating film, and thus are omitted.

The content of the cyclic compound A may be 1% by mass or more or 2% by mass or more, and may be 10% by mass or less, 8% by mass or less, or 5% by mass or less, with respect to the total amount of the polyisocyanate composition, from the viewpoint of making it easier to obtain a cured film having more excellent surface smoothness.

In the present embodiment, the content of the cyclic compound A with respect to the total of the content of the derivative A and the content of the cyclic compound A may be from 0.1 to 15% by mass. The content may be 1% by mass or more or 2% by mass or more, and may be 10% by mass or less, 8% by mass or less, or 5% by mass or less.

The content of the cyclic compound A can be measured, for example, by gel permeation chromatography (GPC). More specifically, it can be measured in accordance with the Examples described later.

The polyisocyanate composition may contain components other than the above-described compounds (such as components mixed in during the production of derivative A, components mixed in during the production of cyclic compound A, etc.) within a range that does not impair the effects of the present disclosure.

The above polyisocyanate composition may be obtained by mixing the pre-synthesized derivative A and cyclic compound A. For example, the above polyisocyanate composition can be prepared by adding the cyclic compound A to a composition comprising a polyisocyanate obtained by isocyanurating an aliphatic diisocyanate. In addition, as described above, the polyisocyanate composition can also be obtained by performing an isocyanuration reaction of an aliphatic diisocyanate in a state diluted with an organic solvent.

For the isocyanuration to form an isocyanurate group, a generally known isocyanuration catalyst can be used. Examples of the isocyanuration catalyst for an aliphatic diisocyanate include quaternary onium salts, metal carboxylate salts, aminosilyl group-containing compounds, and the like. These isocyanuration catalysts can be used alone or in combination of two or more types.

The isocyanuration catalyst may be an aminosilyl group-containing compound such as aminosilane or silylurea, from the viewpoint of suppressing the formation of high-molecular-compounds. Among these, when a disilazane such as hexamethyldisilazane or heptamethyldisilazane is used, the formation of high-molecular-weight compounds can be further suppressed.

The amount of these catalysts used varies depending on the type of catalyst used, but may be from 0.01 to 10% by mass, and may be from 0.1 to 3% by mass, with respect to the isocyanate compound charged.

The reaction temperature for the isocyanuration may be from 60 to 180°C, and may be from 100 to 160°C. When the reaction temperature for the isocyanuration is 60°C or higher, the reaction time can be shortened, so that coloration of the polyisocyanate composition can be further suppressed.

During the isocyanuration, the reaction may be stopped by adding a reaction terminator when the target isocyanate group content and molecular weight are reached. The reaction terminator is one that has an action of deactivating the catalyst, and specific examples include water, a compound having a hydroxyl group, and the like. Alcohols may be used as the reaction terminator. These terminators can be used alone or in combination of two or more types. It is preferable to add the reaction terminator promptly after the target isocyanate group content and molecular weight are reached.

The amount of the reaction terminator added varies depending on the type of reaction terminator, the type of catalyst used, and the like, but may be from 0.1 to 3.5 equivalents, and may be from 0.8 to 2.5 equivalents, of the catalyst. When the reaction terminator is 0.1 equivalents or more, the storage stability of the resulting polyisocyanate composition becomes even better. When the reaction terminator is 3.5 equivalents or less, the formation of a reaction product of the reaction terminator and the aliphatic diisocyanate can be further suppressed, so that a decrease in the isocyanate group content can be suppressed to a higher degree.

When performing a cyclization reaction (that is, when proceeding with a reaction to produce the cyclic compound A by performing an isocyanuration reaction of an aliphatic diisocyanate in a state diluted with an organic solvent), the cyclization reaction is facilitated by using an aliphatic diisocyanate having 4 or fewer carbon atoms. Among these, by using butane diisocyanate, the balance between the reaction rates of the cyclization reaction and the isocyanuration reaction becomes favorable.

When performing the cyclization reaction, an organic solvent that does not risk affecting the reaction and has a boiling point equal to or higher than the reaction temperature may be used. Examples of the organic solvent include aliphatic hydrocarbons such as octane; alicyclic hydrocarbons such as cyclohexane and methylcyclohexane; ketones such as methyl isobutyl ketone and cyclohexanone; esters such as butyl acetate and isobutyl acetate; glycol ether esters such as ethylene glycol ethyl ether acetate, propylene glycol monomethyl ether acetate, 3-methyl-3-methoxybutyl acetate, and ethyl-3-ethoxypropionate; ethers such as dioxane; halogenated hydrocarbons such as methylene iodide and monochlorobenzene; and polar aprotic solvents such as N-methylpyrrolidone, dimethylformamide, dimethylacetamide, dimethyl sulfoxide, and hexamethylphosphonylamide. These solvents can be used alone or in combination of two or more types.

The substrate concentration may be from 20 to 80% by mass, and may be from 30 to 70% by mass or from 40 to 60% by mass. When the substrate concentration is within the above range, the time for the cyclization reaction can be shortened, so that coloration and viscosity increase of the product can be further suppressed.

The cyclization reaction time varies depending on the type of catalyst used, the amount of catalyst added, the substrate concentration, the reaction temperature, and the like, but may be 150 minutes or less, and may be 140 minutes or less or 120 minutes or less. By setting the cyclization reaction time to 150 minutes or less, it is easy to control the production amount of the cyclic compound A to 15% by mass or less.

The above-described isocyanuration reaction and cyclization reaction can be performed sequentially or in parallel. By diluting the reaction system with an organic solvent during or after the isocyanuration reaction to perform the cyclization reaction, it is possible to suppress the occurrence of coloration of the reaction solution and viscosity increase of the product.

The organic solvent used in the reaction may be removed simultaneously with the removal of free aliphatic diisocyanate. To remove the free aliphatic diisocyanate, for example, a removal method by thin-film distillation at 90 to 140°C under a high vacuum of 10 to 300 Pa or an extraction method with an organic solvent may be applied. A residual

content of free aliphatic diisocyanate present in the reaction solution may be 5% by mass or less. When the residual content of the aliphatic diisocyanate is 5% by mass or less, the generation of odor can be further suppressed, and a decrease in storage stability can be suppressed.

For the purpose of extending the pot life, making the coating composition a one-liquid type, and the like, the polyisocyanate in the polyisocyanate composition may be made into a blocked isocyanate using a known blocking agent. That is, the polyisocyanate in the polyisocyanate composition may be a blocked isocyanate. A blocked isocyanate is inactive at room temperature, but when heated, the blocking agent dissociates, and the isocyanate group becomes active again, thereby adding a latent function to react with an active hydrogen group.

The blocking agent is a compound having one active hydrogen in the molecule, and examples include alcohol-based, alkylphenol-based, phenol-based, active methylene, mercaptan-based, acid amide-based, acid imide-based, imidazole-based, urea-based, oxime-based, amine-based, imide-based, and pyrazole-based compounds.

The polyisocyanate composition described above may be used as a curing agent alone or in combination with other components.

[Curing Agent]

A curing agent according to one aspect of the present disclosure is a curing agent for forming a polyurethane resin, which comprses the composition (polyisocyanate composition) of the above aspect.

According to the above curing agent, a polyurethane coating film with excellent surface smoothness can be formed.

The curing agent may consist only of the above polyisocyanate composition, or may contain components other than the polyisocyanate composition. Examples of components other than the polyisocyanate composition include additives that can be included in the coating composition described later.

The content of the cyclic compound A in the curing agent may be from 0.1 to 15% by mass, may be 1% by mass or more or 2% by mass or more, and may be 10% by mass or less, 8% by mass or less, or 5% by mass or less, with respect to the total of the content of the derivative A and the content of the cyclic compound A.

[Polyurethane Resin-forming Composition]

A polyurethane resin-forming composition according to one aspect of the present disclosure comprises the polyisocyanate composition of the above aspect and a polyol. The polyurethane resin-forming composition may be a composition comprising the curing agent of the above aspect and a polyol.

The above polyurethane resin-forming composition can be used for a coating material for forming a coating film. According to the above polyurethane resin-forming composition, a coating composition that can form a polyurethane coating film with excellent surface smoothness can be obtained.

The above polyurethane resin-forming composition may be a one-liquid type composition in which all constituent components are contained in one liquid, or may be a multi-liquid type composition in which the constituent components are present separately in a plurality of liquids. For example, the polyurethane resin-forming composition may comprise a first liquid (base agent) containing a polyol and a second liquid (curing agent) containing a polyisocyanate composition. The polyurethane resin-forming composition may comprise the first liquid, the second liquid, and a third liquid other than these. When the polyurethane resin-forming composition is a multi-liquid type composition, other constituent components (such as a catalyst) may be contained in the first liquid, may be contained in the second liquid, or may be contained in the third liquid.

The polyol is a compound containing an active hydrogen group as a reactive group for an isocyanate group. The polyol is not particularly limited, and polyester polyols, polyether polyols, polycarbonate polyols, polyolefin polyols, acrylic polyols, silicone polyols, castor oil-based polyols, fluorine-based polyols, transesterification products of two or more polyols, and hydroxyl-terminated prepolymers that have undergone a urethanization reaction with a polyisocyanate can be used. These may be used alone, or in combination of two or more types.

(Polyester Polyol)

Examples of the polyester polyol include those obtained from a polycondensation reaction of one or more dicarboxylic acids or their anhydrides with one or more low-molecular-weight polyols having a molecular weight of 500 or less. Examples of the dicarboxylic acid include phthalic acid, isophthalic acid, terephthalic acid, naphthalenedicarboxylic acid, succinic acid, tartaric acid, oxalic acid, malonic acid, glutaric acid, adipic acid, pimelic acid, suberic acid, glutaconic acid, azelaic acid, sebacic acid, 1,4-cyclohexyldicarboxylic acid, α-hydromuconic acid, β-hydromuconic acid, α-butyl-α-ethylglutaric acid, α,β-diethylsuccinic acid, maleic acid, fumaric acid, and the like. Examples of the low-molecular-weight polyols having a molecular weight of 500 or less include ethylene glycol, 1,2-propanediol, 1,3-propanediol, 1,2-butanediol,

1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer diol, bisphenol A, ethylene oxide or propylene oxide adducts of bisphenol A, bis(β-hydroxyethyl)benzene, xylylene glycol, glycerin, trimethylolpropane, pentaerythritol, and the like. It is also possible to use lactone-based polyester polyols obtained from the ring-opening polymerization of cyclic ester (so-called lactone) monomers such as ε-caprolactone, alkyl-substituted ε-caprolactone, δ-valerolactone, and alkyl-substituted δ-valerolactone. Furthermore, it is also possible to use a polyester-amide polyol obtained by replacing a part of the low-molecular-weight polyol with a low-molecular-weight polyamine or a low-molecular-weight amino alcohol such as hexamethylenediamine, isophoronediamine, or monoethanolamine.

(Polyether Polyol)

Examples of the polyether polyol include polyether polyols obtained by addition polymerization of alkylene oxides using a compound having two or more (for example, 2 to 3) active hydrogen groups, such as low-molecular-weight polyols and low-molecular-weight polyamines, as an initiator. As the low-molecular-weight polyols, the same compounds as those exemplified as the low-molecular-weight polyols with a molecular weight of 500 or less can be exemplified. Examples of the low-molecular-weight polyamines include ethylenediamine, propylenediamine, toluenediamine, metaphenylenediamine, diphenylmethanediamine, xylylenediamine, and the like. Examples of the alkylene oxides include ethylene oxide, propylene oxide, butylene oxide, and the like. It is also possible to use polyether polyols obtained by ring-opening polymerization of cyclic ether monomers such as alkyl glycidyl ethers like methyl glycidyl ether, aryl glycidyl ethers like phenyl glycidyl ether, and tetrahydrofuran.

(Polycarbonate Polyol)

Examples of the polycarbonate polyol include those obtained from a dealcoholization reaction or a dephenolation reaction of one or more low-molecular-weight polyols with diaryl carbonates. As the low-molecular-weight polyol, the same compounds as those exemplified as the low-molecular-weight polyols with a molecular weight of 500 or less can be exemplified. Examples of the diaryl carbonates include dialkyl carbonates such as dimethyl carbonate and diethyl carbonate; alkylene carbonates such as ethylene carbonate and propylene carbonate; diphenyl carbonate, dinaphthyl carbonate, dianthryl carbonate, diphenanthryl carbonate, diindanyl carbonate, tetrahydronaphthyl carbonate, and the like. As the polycarbonate polyol, it is also possible to use a polyol obtained by a transesterification reaction of a polycarbonate polyol, a polyester polyol, and a low-molecular-weight polyol.

(Polyolefin Polyol)

Examples of the polyolefin polyol include polybutadiene having two or more hydroxyl groups, hydrogenated polybutadiene, polyisoprene, hydrogenated polyisoprene, and the like.

(Acrylic Polyol)

Examples of the acrylic polyol include those obtained by polymerizing or copolymerizing an acrylic acid ester and/or a methacrylic acid ester (hereinafter referred to as (meth)acrylic acid ester) and a hydroxy compound of acrylic acid and/or a hydroxy compound of methacrylic acid (hereinafter referred to as a hydroxy compound of (meth)acrylic acid) with a polymerization initiator, using light energy such as ultraviolet rays or electron beams, or thermal energy.

((Meth)acrylic acid ester)

Examples of the (meth)acrylic acid ester include alkyl esters having 1 to 20 carbon atoms. Examples of such (meth)acrylic acid esters include alkyl (meth)acrylates such as methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, octyl (meth)acrylate, nonyl (meth)acrylate, and decyl (meth)acrylate, and dodecyl (meth)acrylate; esters of (meth)acrylic acid with alicyclic alcohols such as cyclohexyl (meth)acrylate; and aryl (meth)acrylates such as phenyl (meth)acrylate and benzyl (meth)acrylate. The (meth)acrylic acid ester may be used alone, or in combination of two or more types.

(Hydroxy (meth)acrylic acid compound)

The hydroxy (meth)acrylic acid compound has at least one hydroxyl group in the molecule, which can serve as a reaction site with a polyisocyanate. Examples of the hydroxy (meth)acrylic acid compound include hydroxy (meth)acrylic

acid compounds such as 2-hydroxyethyl acrylate, 2-hydroxypropyl acrylate, 4-hydroxybutyl acrylate, 3-hydroxy-2,2-dimethylpropyl acrylate, and pentaerythritol triacrylate. It is also possible to use hydroxy (meth)acrylic acid compounds such as 2-hydroxyethyl methacrylate, 2-hydroxypropyl methacrylate, 4-hydroxybutyl methacrylate, 3-hydroxy-2,2-dimethylpropyl methacrylate, and pentaerythritol trimethacrylate. The hydroxy (meth)acrylic acid compound may be used alone, or in combination of two or more types.

(Silicone Polyol)

Examples of the silicone polyol include vinyl group-containing silicone compounds obtained by polymerizing, for example, γ-methacryloxypropyltrimethoxysilane, and polysiloxanes having at least one terminal hydroxyl group in the molecule, such as α,ω-dihydroxypolydimethylsiloxane and α,ω-dihydroxypolydiphenylsiloxane.

(Castor oil-based polyol)

Examples of the castor oil-based polyol include linear or branched polyester polyols obtained by the reaction of castor oil fatty acids and polyols. It is also possible to use dehydrated castor oil, partially dehydrated castor oil, and hydrogenated castor oil obtained by adding hydrogen.

(Fluorine-based polyol)

Examples of the fluorine-based polyol include linear or branched polyols obtained by a copolymerization reaction of a fluorine-containing monomer and a monomer having a hydroxyl group as essential components. Here, the fluorine-containing monomer may be a fluoroolefin. Examples of the fluorine-containing monomer include tetrafluoroethylene, chlorotrifluoroethylene, trichlorofluoroethylene, hexafluoropropylene, vinylidene fluoride, vinyl fluoride, trifluoromethyltrifluoroethylene, and the like. Examples of the monomer having a hydroxyl group include hydroxyalkyl vinyl ethers such as hydroxyethyl vinyl ether, 4-hydroxybutyl vinyl ether, and cyclohexanediol monovinyl ether; hydroxyalkyl allyl ethers such as 2-hydroxyethyl allyl ether; hydroxyl group-containing vinyl carboxylates such as hydroxyalkyl crotonic acid vinyl; and hydroxyl group-containing allyl esters.

The number of active hydrogen groups (average number of functional groups) per molecule of the polyol may be from 1.9 to 6.0. When the number of active hydrogen groups is within the above range, the resulting coating film exhibits excellent hardness.

The number-average molecular weight of the polyol may be in the range of 750 to 50,000. When the number-average molecular weight of the polyol is 750 or more, the adhesion is further improved, and when it is 50,000 or less, the solubility in low-polar organic solvents is further improved, and the adhesion is further improved.

In the polyurethane resin-forming composition, the content ratio of the polyisocyanate composition and the polyol is not particularly limited, but the molar ratio of isocyanate groups in the polyisocyanate composition to hydroxyl groups in the polyol (R = isocyanate groups/hydroxyl groups) may be from 0.5 to 2.5. When the molar ratio is 0.5 or more, the hydroxyl groups do not become too excessive, so the adhesion is further improved. In addition, a decrease in crosslinking density is suppressed, and the durability and mechanical strength of the coating film become even better. When the molar ratio is 2.5 or less, the isocyanate groups do not become too excessive, and the reaction with moisture in the air is suppressed, so blistering of the coating film is further reduced, and the accompanying decrease in adhesion is further suppressed. From the same viewpoint as above, the ratio of the total number of moles of isocyanate groups possessed by the isocyanate group-containing compound contained in the polyurethane resin-forming composition to the total number of moles of hydroxyl groups possessed by the hydroxyl group-containing compound contained in the polyurethane resin-forming composition (R' = isocyanate groups/hydroxyl groups) may be from 0.5 to 2.5.

As the organic solvent used as a diluent solvent, for example, one can be appropriately selected and used from the group consisting of ketones such as acetone, methyl ethyl ketone, and methyl isobutyl ketone; esters such as ethyl acetate, butyl acetate, and cellosolve acetate; alcohols such as butanol and isopropyl alcohol; and hydrocarbons such as toluene, xylene, cyclohexane, mineral spirits, and naphtha, according to the purpose and application. These solvents may be used alone, or in combination of two or more types.

[Coating Composition]

A coating composition according to one aspect of the present disclosure comprises the polyurethane resin-forming composition of the above aspect.

The coating composition may appropriately contain a known urethanization catalyst, taking into consideration the pot life, curing conditions, working conditions, and the like. Examples of the urethanization catalyst include organometallic compounds such as dibutyltin diacetate, dibutyltin dilaurate, and dioctyltin dilaurate; and organic amines

such as triethylenediamine and triethylamine, and their salts. These catalysts can be used alone or in combination of two or more types.

The curing conditions for the coating composition are not particularly limited, but the curing temperature may be from -5 to 150°C, the humidity may be from 10 to 95% RH, and the curing time may be from 0.5 to 336 hours.

To the coating composition, additives such as antioxidants like 2,6-di-tert-butyl-4-methylphenol, ultraviolet absorbers, pigments, dyes, solvents, flame retardants, hydrolysis inhibitors, lubricants, plasticizers, fillers, antistatic agents, dispersants, catalysts, storage stabilizers, and surfactants can be appropriately blended as necessary.

[Coating Film (Cured Film)]

A coating film according to one aspect of the present disclosure comprises a cured product of the coating composition of the above aspect.

The above coating film is a coating film formed using the coating composition of the above aspect. Therefore, the coating film has excellent surface smoothness. That the coating film has excellent surface smoothness can be confirmed, for example, by the arithmetic average roughness of the coating film at 23°C. The arithmetic average roughness of the coating film can be measured in accordance with JIS B0601. The arithmetic average roughness of the coating film at 23°C is, for example, 150 nm or less, and may be 125 nm or less or 100 nm or less.

The coating film can be formed by applying the above coating composition onto the surface of a substrate by a known method such as spraying, brushing, dipping, or a coater, and then curing it.

The substrate is not particularly limited, and examples include substrates molded from materials such as stainless steel, phosphated steel, galvanized steel, iron, copper, aluminum, brass, glass, slate, acrylic resin, polycarbonate resin, polyethylene terephthalate resin, polyethylene naphthalate resin, polybutylene phthalate resin, polystyrene resin, AS resin, ABS resin, polycarbonate-ABS resin, 6-nylon resin, 6,6-nylon resin, MXD6 nylon resin, polyvinyl chloride resin, polyvinyl alcohol resin, polyurethane resin, phenol resin, melamine resin, polyacetal resin, chlorinated polyolefin resin, polyolefin resin, polyamide resin, polyetheretherketone resin, polyphenylene sulfide resin, NBR resin, chloroprene resin, SBR resin, and SEBS resin; olefin resins such as polyethylene and polypropylene that have been subjected to corona discharge treatment or other surface treatments; and substrates on which a coating film layer that can serve as an intermediate formation is formed on the substrate surface.

The film thickness of the coating film formed on the surface layer of the substrate may be 10 μm or more from the viewpoint of obtaining a coating film excellent in recoatability, durability, and the like. When the film thickness is 10 μm or more, durability is improved, and the occurrence of tearing or the like of the coating film due to impact can be further suppressed.

**EXAMPLES**

Hereinafter, the content of the present disclosure will be described in more detail using Examples and Comparative Examples, but the present disclosure is not limited to the following Examples.

First, a synthesis example for producing a compound having a cyclic urea group (cyclic compound A) contained in the polyisocyanate composition of the present embodiment will be specifically described, but the cyclic compound contained in the polyisocyanate composition according to one aspect of the present disclosure is not limited to such compounds.

[Synthesis Example 1]

Into a 100 mL four-necked flask equipped with a stirrer, a thermometer, a cooling tube, and a nitrogen gas inlet tube, 1.0 g of 1,3-Diazocan-2-one and 1.2 g of triethylamine were charged and dissolved in 41 g of methylene chloride. This was heated to 80°C, and 1.3 g of 2-ethylhexanoyl chloride was slowly added dropwise over 20 minutes, followed by stirring for 60 minutes. Thereafter, the reaction solution was cooled to room temperature, and the precipitated hydrochloride salt was removed by filtration. The methylene chloride in the filtration liquid was distilled off under reduced pressure using an evaporator. To the concentrate, 20 g of water was added and stirred vigorously. Thereafter, the precipitate was collected by filtration and washed with 5.0 g of water to obtain 1.5 g of cyclic compound Cy-1. Cy-1 is represented by the following formula (2).

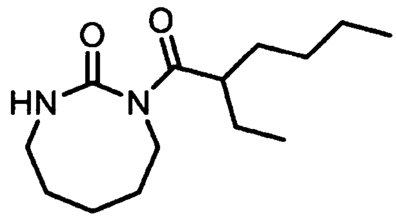

(2)

[Synthesis Example 2]

Into a 50 mL three-necked flask equipped with a stirrer and a nitrogen gas inlet tube, 1.0 g of 1,2-diisocyanatoethane and 4.0 g of ethyl acetate were charged, this was heated to 40°C, and 2.2 g of dioctylamine was slowly added dropwise over 10 minutes, followed by stirring for 30 minutes. Thereafter, the ethyl acetate was distilled off under reduced pressure using an evaporator to obtain 3.2 g of cyclic compound Cy-2. Cy-2 is represented by the following formula (3).

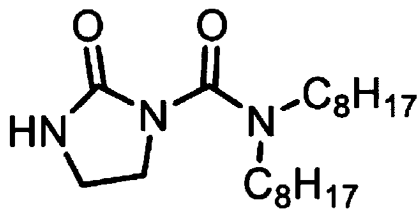

(3)

[Example 1]

(Synthesis of Polyisocyanate Composition)

Into a 1 L four-necked flask equipped with a stirrer, a thermometer, a cooling tube, and a nitrogen gas inlet tube, 500 g of 1,4-butane diisocyanate (NCO content: 60.0% by mass, hereinafter abbreviated as BDI) was charged, this was heated to 100°C, 5.0 g of hexamethyldisilazane as an isocyanuration catalyst was added, the temperature was raised to 120°C, and the mixture was stirred for 1.7 hours. Thereafter, 500 g of butyl acetate was added, and the mixture was stirred for 15 minutes. Thereafter, the temperature was lowered to 50°C in a water bath, 3.0 g of ethanol as a reaction terminator was added, and a termination reaction was carried out at 50°C for 30 minutes. After cooling the reaction solution, excess BDI and butyl acetate were removed by thin-film distillation (conditions: 110°C, 0.04 kPa) to obtain 62 g of polyisocyanate composition P-1. P-1 contained 1.6% by mass of a compound represented by the following formula (4) (cyclic compound Cy-3) and 59.0% by mass of a mononuclear isocyanurate. In this example, the content of the cyclic compound and the content of the mononuclear isocyanurate were measured by the following method.

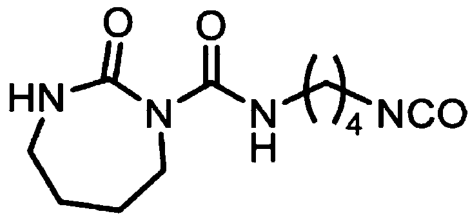

(4)

(Measurement of Content of Cyclic Compound and Content of Mononuclear Isocyanurate)

The content of the cyclic compound and the content of the mononuclear isocyanurate, with respect to the total amount of the polyisocyanate composition, were measured by GPC using the following apparatus.

Apparatus: HLC-8420 (manufactured by Tosoh Corporation)
Column: TSKgel (manufactured by Tosoh Corporation)
G3000H-XL, G2000H-XL, G1000H-XL, one of each is connected in series
Carrier: Tetrahydrofuran
Detection method: Differential refractive index detector

The differential refractive index peak of the cyclic compound varies depending on the chemical structure of the cyclic compound, but in the case of Cy-3 (the compound of formula (4)), it appears at a retention time of about 25.9 minutes. The area of this peak was determined, and the content of the cyclic compound was calculated by the following formula.

Content of cyclic compound (% by mass) = Peak area at retention time25.9 min / Total area of all peaks $\times$ 100

The retention times of Cy-1 and Cy-2 are about 25.1 minutes and about 26.4 minutes, respectively.

The differential refractive index peak of the mononuclear isocyanurate varies depending on the type of aliphatic diisocyanate used, but when 1,4-butane diisocyanate is used, it appears at a retention time of about 23.8 minutes. The area of this peak was determined, and the content of the mononuclear isocyanurate was calculated by the following formula.

Content of mononuclear isocyanurate (% by mass) = Peak area at retention time 23.8 min / Total area of all peaks $\times$ 100

[Example 2]

Into a 1 L four-necked flask equipped with a stirrer, a thermometer, a cooling tube, and a nitrogen gas inlet tube, 500 g of BDI was charged, this was heated to 100°C, 5.0 g of hexamethyldisilazane as an isocyanuration catalyst was added, the temperature was raised to 120°C, and the mixture was stirred for 1.7 hours. Thereafter, 500 g of butyl acetate was added, and the mixture was stirred for 45 minutes. Thereafter, the temperature was lowered to 50°C in a water bath, 3.0 g of ethanol as a reaction terminator was added, and a termination reaction was carried out at 50°C for 30 minutes. After cooling the reaction solution, excess BDI and butyl acetate were removed by thin-film distillation (conditions: 110°C, 0.04 kPa) to obtain 62 g of polyisocyanate composition P-2. P-2 contained 4.2% by mass of the compound represented by formula (4) (Cy-3) and 57.2% by mass of a mononuclear isocyanurate.

[Example 3]

Into a 1 L four-necked flask equipped with a stirrer, a thermometer, a cooling tube, and a nitrogen gas inlet tube, 500 g of BDI was charged, this was heated to 100°C, 5.0 g of hexamethyldisilazane as an isocyanuration catalyst was added, the temperature was raised to 120°C, and the mixture was stirred for 1.7 hours. Thereafter, 500 g of butyl acetate was added, and the mixture was stirred for 80 minutes. Thereafter, the temperature was lowered to 50°C in a water bath, 3.0 g of ethanol as a reaction terminator was added, and a termination reaction was carried out at 50°C for 30 minutes. After cooling the reaction solution, excess BDI and butyl acetate were removed by thin-film distillation (conditions: 110°C, 0.04 kPa) to obtain 62 g of polyisocyanate composition P-3. P-3 contained 8.3% by mass of the compound represented by formula (4) (Cy-3) and 54.5% by mass of a mononuclear isocyanurate.

[Example 4]

Into a 300 mL three-necked flask equipped with a stirrer and a nitrogen gas inlet tube, 150 g of C-HXLV (an HDI-based isocyanurate composition, manufactured by Tosoh Corporation) and 0.75 g of Cy-1 were charged, stirred for 0.5 hours, to obtain polyisocyanate composition P-4. P-4 contained 4.5% by mass of the compound represented by formula (2) (Cy-1) and 63.9% by mass of a mononuclear isocyanurate.

[Example 5]

Into a 1 L four-necked flask equipped with a stirrer, a thermometer, a cooling tube, and a nitrogen gas inlet tube, 500 g of BDI was charged, this was heated to 100°C, 5.0 g of hexamethyldisilazane as an isocyanuration catalyst was added, the temperature was raised to 120°C, and the mixture was stirred for 1.7 hours. Thereafter, the temperature was lowered to 50°C in a water bath, 3.0 g of ethanol as a reaction terminator was added, and a termination reaction was carried out at 50°C for 30 minutes. After cooling the reaction solution, excess BDI was removed by thin-film distillation (conditions: 110°C, 0.04 kPa) to obtain 62 g of a polyisocyanate composition. Into a 300 mL three-necked flask equipped with a stirrer and a nitrogen gas inlet tube, 150 g of the obtained polyisocyanate composition and 1.5 g of Cy-2 were charged, stirred for 0.5 hours, to obtain P-5. P-5 contained 8.9% by mass of the compound represented by formula (3) (Cy-2) and 54.6% by mass of a mononuclear isocyanurate.

[Comparative Example 1]

Into a 1 L four-necked flask equipped with a stirrer, a thermometer, a cooling tube, and a nitrogen gas inlet tube, 500 g of BDI was charged, this was heated to 100°C, 5.0 g of hexamethyldisilazane as an isocyanuration catalyst was added, the temperature was raised to 150°C, and the mixture was stirred for 1.0 hour. Thereafter, the temperature was lowered to 50°C in a water bath, 3.0 g of ethanol as a reaction terminator was added, and a termination reaction was carried out at 50°C for 30 minutes. After cooling the reaction solution, excess BDI was removed by thin-film distillation (conditions: 110°C, 0.04 kPa) to obtain 65 g of polyisocyanate composition P-6. P-6 contained 0.08% by mass of the compound represented by formula (4) (Cy-3) and 61.1% by mass of a mononuclear isocyanurate.

[Comparative Example 2]

Into a 300 mL three-necked flask equipped with a stirrer and a nitrogen gas inlet tube, 150 g of C-HXLV and 3.0 g of Cy-1 were charged, stirred for 0.5 hours, to obtain polyisocyanate composition P-7. P-7 contained 16.5% by mass of the compound represented by formula (2) (Cy-1) and 55.9% by mass of a mononuclear isocyanurate.

[Comparative Example 3]

Into a 1 L four-necked flask equipped with a stirrer, a thermometer, a cooling tube, and a nitrogen gas inlet tube, 500 g of BDI and 500 g of butyl acetate were charged, this was heated to 100°C, 7.5 g of hexamethyldisilazane as an isocyanuration catalyst was added, the temperature was raised to 120°C, and the mixture was stirred for 2.0 hours. Thereafter, the temperature was lowered to 50°C in a water bath, 4.5 g of ethanol as a reaction terminator was added, and a termination reaction was carried out at 50°C for 30 minutes. After cooling the reaction solution, excess BDI and butyl acetate were removed by thin-film distillation (conditions: 110°C, 0.04 kPa) to obtain 60 g of polyisocyanate composition P-8. P-8 contained 21.0% by mass of the compound represented by formula (4) (Cy-3) and 41.2% by mass of a mononuclear isocyanurate.

[Comparative Example 4]

Into a 1 L four-necked flask equipped with a stirrer, a thermometer, a cooling tube, and a nitrogen gas inlet tube, 500 g of 1,6-hexane diisocyanate (HDI) and 500 g of butyl acetate were charged, this was heated to 100°C, 7.5 g of hexamethyldisilazane as an isocyanuration catalyst was added, the temperature was raised to 120°C, and the mixture was stirred for 2.0 hours. Thereafter, the temperature was lowered to 50°C in a water bath, 4.5 g of ethanol as a reaction terminator was added, and a termination reaction was carried out at 50°C for 30 minutes. After cooling the reaction solution, excess HDI and butyl acetate were removed by thin-film distillation (conditions: 130°C, 0.04 kPa) to obtain 61 g of polyisocyanate composition P-9. P-9 contained 65.4% by mass of a mononuclear isocyanurate, but did not contain a cyclic compound.

[Preparation of Two-liquid Coating Composition and Evaluation of Surface Smoothness]

After preparing a coating composition comprising the obtained polyisocyanate composition and an acrylic polyol, a coating film was formed using the coating composition, and the surface smoothness of the formed coating film was evaluated. Specifically, an acrylic polyol (trade name: Acrydic A-801, hydroxyl value: 50 mgKOH/g resin, solid content: 50% by mass, manufactured by DIC Corporation) and a polyisocyanate composition were blended so that the equivalent ratio of hydroxyl groups to isocyanate groups was 1:1, and then butyl acetate was added to prepare a coating composition with a coating solid content of 40% by mass. Next, the obtained coating composition was applied to a steel plate (JIS G3141, trade name: SPCC-SB, treatment method: PF-1077, manufactured by PALTEK Corporation) so that the resin film thickness became 20 μm. Thereafter, after drying for 1 hour in an environment of a temperature of 23°C and a relative humidity of 50%, a heat treatment was performed for 30 minutes in a dryer at 150°C. Subsequently, a coating film was obtained by allowing to stand for 3 days or more in an environment of a temperature of 23°C and a relative humidity of 50%. Next, the arithmetic average roughness of the coating film was measured in accordance with JIS B0601 using a scanning white light interference microscope VS1530 (trade name, manufactured by Hitachi High-Technologies Corporation). The surface smoothness of the coating film was evaluated based on the arithmetic average roughness of Comparative Example 4. The results are shown in

[Table 1]

| | | Cyclic Compound Content (% by mass) | Mononuclear Isocyanurate Content (% by mass) | Arithmetic Average Roughness (nm) |
|---|---|---|---|---|
| Example 1 | P-1 | 1.6 | 59.0 | 42 |
| Example 2 | P-2 | 4.2 | 57.2 | 56 |
| Example 3 | P-3 | 8.3 | 54.5 | 89 |
| Example 4 | P-4 | 4.5 | 63.9 | 32 |
| Example 5 | P-5 | 8.9 | 54.6 | 82 |
| Comparative Example 1 | P-6 | 0.08 | 61.1 | 106 |
| Comparative Example 2 | P-7 | 16.5 | 55.9 | 128 |
| Comparative Example 3 | P-8 | 21 | 41.2 | 134 |
| Comparative Example 4 | P-9 | Not detected | 65.4 | 120 |

As shown in Table 1, the coating films produced from the polyisocyanate compositions P-1 to P-5 had favorable surface smoothness. From these results, the polyisocyanate compositions of Examples 1 to 5 were polyisocyanate compositions that contribute to the production of coating films with excellent surface smoothness.

## Claims

**1.** A composition comprising a polyisocyanate, wherein

the polyisocyanate comprises a derivative derived from an aliphatic diisocyanate, and
a content of a cyclic compound represented by the following formula (1) is from 0.1 to 15% by mass with respect to a total amount of the composition.

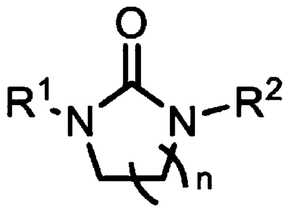

(1)

[In Formula (1), n is an integer from 1 to 6, and $R^1$ and $R^2$ are each independently a hydrogen atom or a monovalent organic group having 1 to 20 carbon atoms.]

**2.** The composition according to claim 1, wherein the derivative comprises an isocyanurate derived from an aliphatic diisocyanate.

**3.** The composition according to claim 1 or 2, wherein the aliphatic diisocyanate comprises butane diisocyanate.

**4.** The composition according to claim 1 or 2, wherein

the $R^1$ and the $R^2$ are each independently a hydrogen atom, an aliphatic group having 1 to 20 carbon atoms, an alicyclic group having 3 to 20 carbon atoms, or an aromatic group having 6 to 20 carbon atoms, and
the aliphatic group, the alicyclic group, and the aromatic group may be substituted with substituents and may contain one or more atoms selected from the group consisting of oxygen atoms, nitrogen atoms, and sulfur atoms.

**5.** The composition according to claim 1 or 2, wherein one of the $R^1$ and the $R^2$ is a hydrogen atom, and the other is a monovalent organic group having 1 to 20 carbon atoms.

**6.** A curing agent for forming a polyurethane resin, comprising the composition according to claim 1.

**7.** A polyurethane resin-forming composition comprising the composition according to claim 1 and a polyol.

**8.** A coating composition comprising the polyurethane resin-forming composition according to claim 7.

**9.** A coating film, comprising a cured product of the coating composition according to claim 8.

**10.** A surface smoothing agent for a polyurethane coating film, comprising a cyclic compound represented by the following formula (1).

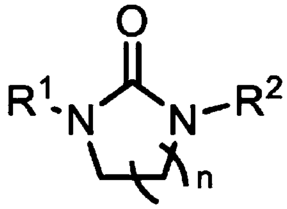

(1)

[In formula (1), n is an integer from 1 to 6, and $R^1$ and $R^2$ are each independently a hydrogen atom or a monovalent organic group having 1 to 20 carbon atoms.

## INTERNATIONAL SEARCH REPORT

International application No. **PCT/JP2024/008109**

**A. CLASSIFICATION OF SUBJECT MATTER**

***C08G 18/08***(2006.01)i; ***C08G 18/09***(2006.01)i; ***C08G 18/71***(2006.01)i; ***C09D 175/04***(2006.01)i
FI: C08G18/08 038; C08G18/09 020; C08G18/71 010; C09D175/04

According to International Patent Classification (IPC) or to both national classification and IPC

**B. FIELDS SEARCHED**

Minimum documentation searched (classification system followed by classification symbols)

C08G18/08; C08G18/09; C08G18/71; C09D175/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 56-151720 A (DAINIPPON INK & CHEMICALS INC.) 24 November 1981 (1981-11-24) claims, page 2, lower right column, line 9 to page 3, upper left column, line 2, examples | 1-10 |
| A | JP 2-276877 A (NIPPON PAINT CO., LTD.) 13 November 1990 (1990-11-13) claims, examples | 1-10 |
| A | JP 2005-298624 A (AZ ELECTRONIC MATERIALS KK) 27 October 2005 (2005-10-27) claims, examples | 1-10 |
| A | US 4448816 A (THE UPJOHN COMPANY) 15 May 1984 (1984-05-15) claims, examples | 1-10 |
| A | WO 2019/069761 A1 (ASAHI KASEI KABUSHIKI KAISHA) 11 April 2019 (2019-04-11) claims, examples | 1-10 |
| A | JP 11-228524 A (NIPPON POLYURETHANE IND. CO., LTD.) 24 August 1999 (1999-08-24) claims, examples | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/008109**

**C. DOCUMENTS CONSIDERED TO BE RELEVANT**

| Category* | Citation of document, with indication, where appropriate, of the relevant passages | Relevant to claim No. |
|---|---|---|
| P, X | JP 2023-104036 A (BEKKU KK) 28 July 2023 (2023-07-28) claims, paragraphs [0034]-[0035], [0040]-[0042], [0065], examples | 1-9 |
| P, A | | 10 |
| P, A | WO 2023/190307 A1 (TOSOH CORPORATION) 05 October 2023 (2023-10-05) claims, examples | 1-10 |

Form PCT/ISA/210 (second sheet) (July 2022)

**INTERNATIONAL SEARCH REPORT**
**Information on patent family members**

International application No.
**PCT/JP2024/008109**

| Patent document cited in search report | Publication date (day/month/year) | Patent family member(s) | Publication date (day/month/year) |
|---|---|---|---|
| JP 56-151720 A | 24 November 1981 | (Family: none) | |
| JP 2-276877 A | 13 November 1990 | US 5098949 A<br>claims, examples<br>EP 377337 A1 | |
| JP 2005-298624 A | 27 October 2005 | (Family: none) | |
| US 4448816 A | 15 May 1984 | (Family: none) | |
| WO 2019/069761 A1 | 11 April 2019 | (Family: none) | |
| JP 11-228524 A | 24 August 1999 | (Family: none) | |
| JP 2023-104036 A | 28 July 2023 | (Family: none) | |
| WO 2023/190307 A1 | 05 October 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6482657 B


### Non-patent literature cited in the description


- *Journal of Organic Chemistry*, 1978, vol. 43, 1544-1546
- **D. I. MENDELEEVA**. *Zhurnal Vsesoyuznogo Khimicheskogo Obshchestva*, 1979, vol. 24, 310-311